# EUROPEAN PATENT APPLICATION

(11) **EP 4 039 732 A1**
(43) Date of publication of application: **10.08.2022**
(21) Application number: 20873022.6
(22) Date of filing: 28.09.2020
(51) Int. Cl.: C08J 3/02, C08F 220/10, C08L 33/04

(54) **ACRYLIC EMULSION**

(30) Priority: 30.09.2019 JP 2019180087
(71) Applicant: Osaka Soda Co., Ltd., Osaka-shi Osaka 550-0011 (JP)
(72) Inventor: MIKI, Shota, Osaka-shi, Osaka 550-0011 (JP); KITAGAWA, Motoki, Osaka-shi, Osaka 550-0011 (JP); NAITOU, Masatsugu, Osaka-shi, Osaka 550-0011 (JP)
(74) Representative: Müller-Boré & Partner Patentanwälte PartG mbB
(86) International application number: PCT/JP2020/036687
(87) International publication number: WO 2021/065823

(57) **Abstract**

The present invention addresses the problem of providing an emulsion having excellent emulsion stability and excellent coagulability (salting-out properties) in manufacturing of an acrylic rubber. The present invention provides an acrylic emulsion containing an acrylic polymer having an average particle diameter of 150-300 nm in a step for emulsion-polymerizing a monomer in manufacturing of an acrylic rubber.

## Description

### TECHNICAL FIELD

The present invention relates to an acrylic emulsion for manufacture of acrylic rubber.

### BACKGROUND ART

Acrylic rubber is generally a polymer including an acrylate as a main raw material, and known as a material excellent in various physical properties relating to durability. Acrylic rubber is widely used as industrial rubber materials such as engine gaskets, oil hoses, air hoses, and O-rings, and rubber materials for automobiles.

Acrylic rubber is obtained through the steps of subjecting a monomer to emulsion polymerization to obtain an emulsion polymerization solution, coagulating the emulsion polymerization solution with a coagulant to obtain a coagulated slurry, and drying the coagulated slurry.

In methods for manufacturing acrylic rubber, manufacturing conditions for each step have been studied (see Patent Document 1). However, few studies have been made on an emulsion polymerization solution (acrylic emulsion), which is obtained by emulsion polymerization of a monomer, for manufacture of acrylic rubber.

### PRIOR ART DOCUMENT

### PATENT DOCUMENT

Patent Document 1: WO 2018/147142

### SUMMARY OF THE INVENTION

### PROBLEMS TO BE SOLVED BY THE INVENTION

The present invention addresses the problem of providing an emulsion having excellent coagulability (an excellent salting-out property) and excellent stability.

### MEANS FOR SOLVING THE PROBLEM

As a result of various studies on the above-described problem, the present inventors have found that if, in a step of emulsion polymerization of a monomer in manufacture of acrylic rubber, an acrylic emulsion is obtained including an acrylic polymer having an average particle size of 150 nm to 300 nm, the problem can be solved, and thus the present invention has been completed.

Aspects of the present invention are as follows.
Item 1 An acrylic emulsion including an acrylic polymer, the acrylic polymer including a constituent unit derived from a (meth)acrylate and a constituent unit having a crosslinking group and derived from an unsaturated monomer, the acrylic polymer having an average particle size of 150 nm to 300 nm.
Item 2 Acrylic rubber including the acrylic emulsion according to Item 1, wherein the acrylic rubber is produced using the acrylic emulsion.
Item 3 An acrylic rubber-containing composition including the acrylic rubber according to Item 2 and a crosslinking agent.
Item 4 A crosslinked acrylic rubber product including the acrylic rubber-containing composition according to Item 3, wherein the crosslinked acrylic rubber product is produced using the acrylic rubber-containing composition.
Item 5 A method for manufacturing acrylic rubber, the method including the steps of
   coagulating the acrylic emulsion according to Item 1 with a coagulant to obtain a coagulated slurry and
   drying the coagulated slurry to obtain acrylic rubber.

### ADVANTAGES OF THE INVENTION

According to the present invention, an emulsion has excellent coagulability in manufacturing acrylic rubber and has excellent stability by including an acrylic polymer having an average particle size of 150 nm to 300 nm. Thus, such emulsion can be excellent in stability during liquid feeding in the manufacturing process.

### EMBODIMENTS OF THE INVENTION

### Acrylic Emulsion

The acrylic emulsion of the present invention is obtained by dispersing, in water, an acrylic polymer that includes a constituent unit derived from a (meth)acrylate and a constituent unit having a crosslinking group and derived from an unsaturated monomer and has an average particle size of 150 nm to 300 nm (acrylic fine particles). The term "average particle size" refers to the particle size at which the cumulative volume is 50% in a volume-based particle size distribution measured by a light scattering method (D50 particle size). The average particle size can be measured with a dynamic light scattering method using, for example, a dynamic light scattering device (such as "Zetasizer Nano S").

The acrylic polymer of the present invention includes a constituent unit derived from a (meth)acrylate and a constituent unit having a crosslinking group and derived from an unsaturated monomer.

Examples of the constituent unit derived from a (meth)acrylate include constituent units derived from an alkyl (meth)acrylate and constituent units derived from an alkoxyalkyl (meth)acrylate, and the constituent unit is preferably derived from an alkyl acrylate having an alkyl group with 1 to 8 carbon atoms or derived from an alkoxy acrylate having an alkoxyalkyl group with 2 to 8 carbon atoms, more preferably derived from an alkyl acrylate having an alkyl group with 2 to 6 carbon atoms and/or derived from an alkoxyalkyl acrylate having an alkoxyalkyl group with 2 to 6 carbon atoms, and particularly preferably derived from an alkyl acrylate having an alkyl group with 2 to 4 carbon atoms and/or derived from an alkoxyalkyl acrylate having an alkoxyalkyl group with 2 to 4 carbon atoms. The constituent unit derived from a (meth)acrylate may be a constituent unit derived from a single (meth)acrylate or from two or more (meth)acrylates.

Specific examples of the alkyl (meth)acrylate include (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, n-pentyl (meth)acrylate, n-hexyl (meth)acrylate, n-heptyl (meth)acrylate, n-octyl (meth)acrylate, 2-ethylhexyl (meth)acrylate, and cyclohexyl (meth)acrylate, and ethyl (meth)acrylate and n-butyl (meth)acrylate are preferable.

Specific examples of the alkoxyalkyl (meth)acrylate include (meth)acrylates such as methoxymethyl (meth)acrylate, methoxyethyl (meth)acrylate, ethoxymethyl (meth)acrylate, 2-ethoxyethyl (meth)acrylate, 2-propoxyethyl (meth)acrylate, 2-butoxyethyl (meth)acrylate, 2-methoxypropyl (meth)acrylate, 2-ethoxypropyl (meth)acrylate, 3-methoxypropyl (meth)acrylate, 3-ethoxypropyl (meth)acrylate, 4-methoxybutyl (meth)acrylate, and 4-ethoxybutyl (meth)acrylate, and methoxyethyl (meth)acrylate is preferable.

The acrylic rubber of the present invention more preferably includes the constituent unit derived from a (meth)acrylate in an amount of 50 mass% or more and particularly preferably 60 mass% or more based on all the constituent units in the acrylic rubber. The upper limit of the amount is preferably 99.5 mass% or less, more preferably 99 mass% or less, and particularly preferably 98.5 mass% or less.

The acrylic polymer of the present invention includes a constituent unit derived from an unsaturated monomer having a crosslinking group. Examples of the constituent unit derived from an unsaturated monomer having a crosslinking group include constituent units derived from an unsaturated monomer having a halogen group (such as a chlorine group), constituent units derived from an unsaturated monomer having a carboxy group, and constituent units derived from an unsaturated monomer having an epoxy group, and the constituent units derived from an unsaturated monomer including an unsaturated monomer having a halogen group (particularly, a chlorine group) or a carboxyl group are particularly preferable.

Examples of the unsaturated monomer having a halogen group include 2-chloroethyl vinyl ether, 2-chloroethyl acrylate, vinyl benzyl chloride, vinyl monochloroacetate, and allyl chloroacetate.

Examples of the unsaturated monomer having a carboxy group include unsaturated monocarboxylic acids such as (meth)acrylic acid, crotonic acid, 2-pentenoic acid, and cinnamic acid, unsaturated dicarboxylic acids such as fumaric acid, maleic acid, and itaconic acid, carboxylic anhydrides such as maleic anhydride and citraconic anhydride, butenedioic acid mono chain alkyl esters such as monomethyl fumarate, monoethyl fumarate, mono-n-butyl fumarate, monomethyl maleate, monoethyl maleate, mono-2-ethylhexyl maleate, and mono-n-butyl maleate, butenedioic acid mono cyclic alkyl esters such as monocyclopentyl fumarate, monocyclohexyl fumarate, monocyclopentyl maleate, and monocyclohexyl maleate, and itaconic acid monoesters such as monomethyl itaconate, monoethyl itaconate, mono-n-butyl itaconate, and monocyclohexyl itaconate. Among these unsaturated monomers, unsaturated dicarboxylic acid monoesters such as monoethyl fumarate, monopropyl fumarate, monobutyl fumarate, monoethyl itaconate, monopropyl itaconate, and monobutyl itaconate are particularly mentioned as an example.

Examples of the unsaturated monomer having an epoxy group include glycidyl (meth)acrylate and (meth)allyl glycidyl ether.

The content of the constituent unit derived from an unsaturated monomer having a crosslinking group in the acrylic polymer is preferably 0.1 mass% or more, more preferably 0.3 mass% or more, and particularly preferably 0.5 mass% or more, and preferably 10 mass% or less, more preferably 5 mass% or less, and particularly preferably 3 mass% or less based on all the constituent units in the acrylic polymer. The content of the constituent unit derived from an unsaturated monomer having a crosslinking group is preferably in the above-described range from the viewpoints of the physical properties of acrylic rubber to be manufactured, such as the strength and the compression set, and processability.

The acrylic polymer of the present invention may include, in addition to the above-described constituent units, a constituent unit derived from another monomer copolymerizable with the above-described constituent units. Examples of another constituent unit include constituent units derived from an ethylenically unsaturated nitrile, constituent units derived from a (meth)acrylamide-based monomer, constituent units derived from an aromatic vinyl-based monomer, constituent units derived from a conjugated diene-based monomer, constituent units derived from a non-conjugated diene, and constituent units derived from another olefin.

Examples of the ethylenically unsaturated nitrile include compounds of acrylonitrile, methacrylonitrile, α-methoxyacrylonitrile, and vinylidene cyanide.

Examples of the (meth)acrylamide-based monomer include compounds of acrylamide, methacrylamide, diacetone acrylamide, diacetone methacrylamide, N-butoxymethylacrylamide, N-butoxymethylmethacrylamide, N-butoxyethylacrylamide, N-butoxyethylmethacrylamide, N-methoxymethylacrylamide, N-methoxymethylmethacrylamide, N-propioxymethylacrylamide, N-propioxymethylmethacrylamide, N-methylacrylamide, N-methylmethacrylamide, N,N-dimethylacrylamide, N,N-dimethylmethacrylamide, N,N-diethylacrylamide, N,N-diethylmethacrylamide, N-methylolacrylamide, N-methylolmethacrylamide, ethacrylamide, crotonamide, cinnamic acid amide, maleic acid diamide, itaconic diamide, methylmaleinamide, methylitaconamide, maleinimide, and itaconimide.

Examples of the aromatic vinyl-based monomer include compounds of styrene, α-methylstyrene, o-methylstyrene, p-methylstyrene, o-ethylstyrene, p-ethylstyrene, α-fluorostyrene, p-trifluoromethylstyrene, p-methoxystyrene, p-aminostyrene, p-dimethylaminostyrene, p-acetoxystyrene, styrenesulfonic acid and salts thereof, α-vinylnaphthalene, 1-vinylnaphthalene-4-sulfonic acid and salts thereof, 2-vinylfluorene, 2-vinylpyridine, 4-vinylpyridine, divinylbenzene, diisopropenylbenzene, and vinylbenzyl chloride.

Examples of the conjugated diene-based monomer include compounds of 1,3-butadiene, 2-methyl-1,3-butadiene, 2-chloro-1,3-butadiene, 1,2-dichloro-1,3-butadiene, 2,3-dichloro-1,3-butadiene, 2,3-dimethyl-1,3-butadiene, 2-neopentyl-1,3-butadiene, 2-bromo-1,3-butadiene, 2-cyano-1,3-butadiene, 1,3-pentadiene, 1,3-hexadiene, chloroprene, and piperylene.

Examples of the constituent unit derived from a non-conjugated diene include constituent units derived from a compound of a non-conjugated diene such as 1,4-pentadiene, 1,4-hexadiene, ethylidene norbornene, norbornadiene, or dicyclopentadiene.

Examples of another olefin-based monomer include esters such as dicyclopentadienyl acrylate, dicyclopentadienyl methacrylate, dicyclopentadienyl ethyl acrylate, and dicyclopentadienyl ethyl methacrylate, and compounds of ethylene, propylene, vinyl chloride, vinylidene chloride, 1,2-dichloroethylene, vinyl acetate, vinyl fluoride, vinylidene fluoride, 1,2-difluoroethylene, vinyl bromide, vinylidene bromide, 1,2-dibromoethylene, ethyl vinyl ether, and butyl vinyl ether.

In a case where the acrylic polymer of the present invention includes a constituent unit derived from copolymerizable another monomer described above, the content of the monomer in all the constituent units is usually 0 to 45 mass% and preferably 0 to 20 mass%.

In the acrylic emulsion of the present invention, water used for dispersing the acrylic polymer is not particularly limited, and commonly used water can be used. Specific examples of the water include tap water, pure water, distilled water, ion-exchanged water, and ultrapure water.

The acrylic emulsion of the present invention preferably includes the acrylic polymer at a content such that the concentration of the solid content other than water (hereinafter, sometimes simply referred to as "solid content") is 5 to 80 mass%, more preferably 10 to 70 mass%, and particularly preferably 15 to 60 mass%.

As the acrylic emulsion of the present invention, an emulsion polymerization solution can be used that is obtained by emulsion polymerization of a (meth)acrylate (monomer) and an unsaturated monomer having a crosslinking group.

In a case where the acrylic emulsion of the present invention is obtained as an emulsion polymerization solution, the acrylic emulsion can be obtained by emulsion polymerization of a monomer (also referred to as an emulsion polymerization step). The emulsifier, the polymerization initiator, the chain transfer agent, the polymerization terminator, and the like used in the emulsion polymerization can be conventionally known agents that are generally used.

The emulsifier is not particularly limited, and an emulsifier generally used in an emulsion polymerization method, such as a nonionic emulsifier or an anionic emulsifier, can be used. Examples of the nonionic emulsifier include polyoxyethylene alkyl ethers, polyoxyethylene alcohol ethers, polyoxyethylene alkyl phenyl ethers, polyoxyethylene polycyclic phenyl ethers, polyoxyalkylene alkyl ethers, sorbitan fatty acid esters, polyoxyethylene fatty acid esters, and polyoxyethylene sorbitan fatty acid esters. Examples of the anionic emulsifier include alkylbenzene sulfonate salts, alkyl sulfate salts, polyoxyethylene alkyl ether sulfate salts, polyoxyalkylene alkyl ether phosphates and salts thereof, polyoxyalkylene alkyl phenyl ether phosphates and salts thereof, and fatty acid salts. Examples of the salt include alkali metals such as sodium and potassium, ammonia, and amines. These emulsifiers may be used singly or in combination of two or more kinds thereof.

The amount of use of the emulsifier is to be the general amount of the emulsifier used in an emulsion polymerization method. Specifically, the amount is in the range of 0.01 to 10 mass%, preferably 0.03 to 7 mass%, and more preferably 0.05 to 5 mass% with respect to the amount of monomers set for preparation. In the case of using a reactive surfactant as the monomer component, use of the emulsifier is not necessarily required.

The polymerization initiator is not particularly limited, and a polymerization initiator generally used in an emulsion polymerization method can be used. Specific examples of the polymerization initiator include inorganic polymerization initiators typified by persulfates such as potassium persulfate, sodium persulfate, and ammonium persulfate, organic peroxide-based polymerization initiators such as 2,2-di(4,4-di-(t-butylperoxy)cyclohexyl)propane, 1-di-(t-hexylperoxy)cyclohexane, 1,1 -di-(t-butylperoxy)cyclohexane, n-butyl-4,4-di-(t-butylperoxy)valerate, 2,2-di(t-butylperoxy)butane, t-butyl hydroperoxide, cumene hydroperoxide, diisopropylbenzene hydroperoxide, p-menthane hydroperoxide, 1,1,3,3-tetramethylbutyl hydroperoxide, t-butyl cumyl peroxide, di-t-butyl peroxide, di-t-hexyl peroxide, di(2-t-butylperoxyisopropyl)benzene, dicumyl peroxide, diisobutyryl peroxide, di(3,5,5-trimethylhexanoyl) peroxide, dilauroyl peroxide, disuccinic acid peroxide, dibenzoyl peroxide, di(3-methylbenzoyl) peroxide, benzoyl(3-methylbenzoyl) peroxide, diisopropylperoxydicarbonate, di-n-propylperoxydicarbonate, di(4-t-butylcyclohexyl) peroxydicarbonate, di(2-ethylhexyl) peroxydicarbonate, di-sec-butyl peroxydicarbonate, cumyl peroxyneodecanoate, 1,1,3,3-tetramethylbutyl peroxyneodecanoate, t-hexyl peroxyneodecanoate, t-butyl peroxyneodecanoate, t-hexylperoxypivalate, t-butylperoxypivalate, 2,5-dimethyl-2,5-di(2-ethylhexanoylperoxy)hexane, 1,1,3,3-tetramethylbutyl peroxy-2-ethylhexanoate, t-hexyl peroxy-2-ethylhexanoate, t-butyl peroxy-2-ethylhexanoate, t-butylperoxylaurate, t-butyl peroxy-3,5,5-trimethylhexanoate, t-hexylpcroxyisopropyl monocarbonate, t-butylperoxyisopropyl monocarbonate, t-butyl peroxy 2-ethylhexyl monocarbonate, 2,5-dimethyl-2,5-di(benzoylperoxy)hexane, t-butylperoxyacetate, t-hexyl peroxybenzoate, t-butyl peroxybenzoate, and 2,5-dimethyl-2,5-di(t-butylperoxy)hexane, and azo-based polymerization initiators such as hydroperoxide, azobisisobutyronitrile, 4-4'-azobis(4-cyanovaleric acid), 2-2'-azobis[2-(2-imidazolin-2-yl)propane, 2,2'-azobis(propane-2-carboamidine), 2-2'-azobis[N-(2-carboxyethyl)-2-methylpropanamide], 2-2'-azobis{2-[1-(2-hydroxyethyl)-2-imidazolin-2-yl]propane}, 2-2'-azobis(1-imino-1-pyrrolidino-2-methylpropane), and 2-2'-azobis{2-methyl-N-[1,1-bis(hydroxymethyl)-2-hydroxyethyl]propanamide}. These polymerization initiators may be used singly or in combination of two or more kinds thereof.

The amount of use of the polymerization initiator is to be the general amount of the polymerization initiator used in an emulsion polymerization method. Specifically, the amount is in the range of 0.01 to 5 mass%, preferably 0.01 to 4 mass%, and more preferably 0.02 to 3 mass% with respect to the amount of monomers set for preparation.

In addition, organic peroxides and inorganic peroxides as a polymerization initiator can be used as a redox-based polymerization initiator in combination with a reducing agent. The reducing agent used in combination is not particularly limited, and examples of the reducing agent include compounds containing a metal ion in a reduced state, such as ferrous sulfate and cuprous naphthenate, methane compounds such as sodium methanesulfonate, amine compounds such as dimethylaniline, ascorbic acid and its salts, and reducing inorganic salts such as alkali metal salts of sulfurous acid and thiosulfate. These reducing agents can be used singly or in combination of two or more kinds thereof. The amount of use of the reducing agent is preferably 0.0001 to 10.0 parts by mass with respect to 100 parts by mass of the monomers set for preparation.

A molecular weight modifier can be used as necessary. Specific examples of the molecular weight modifier include alkyl mercaptans such as n-hexyl mercaptan, n-octyl mercaptan, t-octyl mercaptan, n-dodecyl mercaptan, t-dodecyl mercaptan, and n-stearyl mercaptan, xanthogen compounds such as 2,4-diphenyl-4-methyl-1-pentene, 2,4-diphenyl-4-methyl-2-pentene, dimethylxanthogen disulfide, and diisopropylxanthogen disulfide, thiuram-based compounds such as terpinolene, tetramethylthiuram disulfide, tetraethylthiuram disulfide, and tetramethylthiuram monosulfide, phenol-based compounds such as 2,6-di-t-butyl-4-methylphenol and styrenated phenol, allyl compounds such as allyl alcohol, halogenated hydrocarbon compounds such as dichloromethane, dibromomethane, and carbon tetrabromide, vinyl ethers such as α-benzyloxystyrene, α-benzyloxyacrylonitrile, and α-benzyloxyacrylamide, triphenylethane, pentaphenylethane, acrolein, methacrolein, thioglycolic acid, thiomalic acid, and 2-ethylhexylthioglycolate. These molecular weight modifiers may be used singly or in combination of two or more kinds thereof. The amount of the molecular weight modifier is not particularly limited, but the molecular weight modifier is usually used in an amount of 0 to 5 parts by mass based on 100 parts by mass of the monomer set for preparation.

Examples of the polymerization terminator include hydroxylamine, hydroxylamine sulfate, diethylhydroxylamine, hydroxylamine sulfonic acid and alkali metal salts thereof, sodium dimethyldithiocarbamate, and quinone compounds such as hydroquinone. The amount of use of the polymerization terminator is not particularly limited, and is usually 0 to 2 parts by mass with respect to 100 parts by mass of the total monomers.

In addition, polymerization auxiliary materials such as a particle size adjusting agent, a chelating agent, and an oxygen scavenger can be used as necessary.

The emulsion polymerization may be performed with a batch method, a semi-batch method, or a continuous method. The polymerization time and the polymerization temperature are not particularly limited. The polymerization time and the polymerization temperature can be appropriately selected according to the kind and the like of the polymerization initiator to be used, and the polymerization temperature is generally 10 to 100°C, and the polymerization time is generally 0.5 to 100 hours.

The method of adjusting the particle size of the acrylic polymer is not particularly limited, and the particle size can be adjusted according to the kind and the amount of the emulsifier, the ratios of water and the monomer, stirring conditions during polymerization, and the like.

The acrylic emulsion of the present invention preferably has a viscosity (under an environment at 25°C) of 7.0 to 20.0 mPa·s and more preferably 7.5 to 15.0 mPa·s because such an acrylic emulsion has excellent coagulability (an excellent salting-out property) and excellent stability. The viscosity of the acrylic emulsion is a value measured in accordance with JIS K 7117-1 under an environment at 23°C with a commercially available rotational viscometer (for example, Brookfield manufactured by EKO Instruments) using an LV-1 spindle at a rotation speed of 30 rpm.

The acrylic emulsion of the present invention is coagulated with a coagulant to obtain a coagulated slurry, and the coagulated slurry is dried to obtain acrylic rubber.

The step of coagulating the acrylic emulsion of the present invention (emulsion polymerization solution obtained in the emulsion polymerization step) with a coagulant will be described. Hereinafter, the step can also be referred to as a coagulation step.

The coagulant used in the coagulation step is not particularly limited, and is preferably an inorganic metal salt, and specific examples of the metal salt include sodium sulfate, magnesium sulfate, aluminum sulfate, sodium chloride, and calcium chloride.

The method of coagulation with a coagulant is not particularly limited, and a general method can be used. An example of the method is a method in which the acrylic emulsion (emulsion polymerization solution) is supplied to an aqueous solution containing a coagulant continuously or in batches, and as a result of this operation, a coagulated slurry is obtained. At this time, the temperature of the aqueous solution containing a coagulant is affected by, for example, the kind and the amount of use of the monomer, and the shearing force due to stirring and the like. Therefore, the temperature cannot be specified uniformly, but is generally 50°C or more, and preferably in the range of 60°C to 100°C.

The coagulated slurry obtained with the above-described method is preferably washed with water in order to remove the coagulant. Hereinafter, the step can also be referred to as a water washing step. If the coagulated slurry is not washed at all or is insufficiently washed with water, an ion residue derived from the coagulant may precipitate in the molding step.

The step of drying the coagulated slurry obtained by coagulation will be described. Hereinafter, the step can also be referred to as a drying step.

The coagulated slurry is dried by removing moisture from the coagulated slurry, and thus acrylic rubber can be obtained. The method of drying is not particularly limited, and a dryer such as a flash dryer or a fluid dryer is generally used for drying.

The drying temperature is not particularly limited, and is preferably 50 to 200°C and more preferably 80 to 200°C. The drying time depends on the drying temperature.

Before the drying step, a dehydration step may be performed using a centrifuge or the like.

From the viewpoint of processability, the acrylic rubber used in the present invention preferably has a molecular weight in the range such that in a Mooney scorch test specified in JIS K 6300, the Mooney viscosity (ML₁₊₄) at 100°C is 10 to 100, more preferably 15 to 90, and still more preferably 20 to 80.

The method for manufacturing acrylic rubber using the acrylic emulsion of the present invention can be described as a method for manufacturing acrylic rubber described below:
the method including an emulsion polymerization step of subjecting a monomer to emulsion polymerization to obtain an emulsion polymerization solution (acrylic emulsion), a coagulation step of coagulating the emulsion polymerization solution with a coagulant to obtain a coagulated slurry, and a drying step of drying a hydrous crumb, wherein
the emulsion polymerization solution (acrylic emulsion) includes an acrylic polymer including a constituent unit derived from a (meth)acrylate and a constituent unit having a crosslinking group and derived from an unsaturated monomer, the acrylic polymer having an average particle size of 150 nm to 300 nm.

### <Acrylic Rubber-Containing Composition>

The acrylic rubber-containing composition of the present invention contains at least the acrylic rubber and a crosslinking agent.

As the crosslinking agent, conventionally known crosslinking agents that are usually used for crosslinking rubber can be used such as polyvalent amine compounds, polyvalent epoxy compounds, polyvalent isocyanate compounds, aziridine compounds, sulfur compounds, thiol compounds, and higher fatty acid metal salts (fatty acid metal soaps). Among these crosslinking agents, polyvalent amine compounds are preferably used.

Examples of the polyvalent amine compounds include aliphatic polyvalent amine compounds such as hexamethylenediamine, hexamethylenediamine carbamate, and N,N'-dicinnamylidene-1,6-hexanediamine, and aromatic polyvalent amine compounds such as 4,4'-methylenedianiline, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, 1,3,5-benzenetriaminomethyl, and isophthalic dihydrazide.

Examples of the polyvalent epoxy compounds include glycidyl ether type epoxy compounds such as phenol novolac type epoxy compounds, cresol novolac type epoxy compounds, cresol type epoxy compounds, bisphenol A type epoxy compounds, bisphenol F type epoxy compounds, brominated bisphenol A type epoxy compounds, brominated bisphenol F type epoxy compounds, and hydrogenated bisphenol A type epoxy compounds, and other polyvalent epoxy compounds such as alicyclic epoxy compounds, glycidyl ester type epoxy compounds, glycidyl amine type epoxy compounds, and isocyanurate type epoxy compounds.

Examples of the polyvalent isocyanate compounds include 2,4-tolylene diisocyanate, 2,6-tolylene diisocyanate, 4,4'-diphenylmethane diisocyanate, hexamethylene diisocyanate, p-phenylene diisocyanate, m-phenylene diisocyanate, 1,5-naphthylene diisocyanate, 1,3,6-hexamethylene triisocyanate, 1,6,11-undecane triisocyanate, and bicycloheptane triisocyanate.

Examples of the aziridine compounds include tris-2,4,6-(1-aziridinyl)-1,3,5-triazine, tris[1-(2-methyl)aziridinyl]phosphinoxide, and hexa[1-(2-methyl)aziridinyl]triphosphatriazine.

Examples of the sulfur compounds include sulfur, 4,4'-dithiomorpholine, tetramethylthiuram disulfide, and tetraethylthiuram disulfide.

Examples of the thiol compounds include 1,3,5-triazinedithiol and its derivatives, and 1,3,5-triazinetrithiol.

Specific examples of the higher fatty acid metal salts include lithium salts, sodium salts, potassium salts, and cesium salts of fatty acids having 8 to 18 carbon atoms such as acetic acid, propionic acid, caproic acid, lauric acid, and stearic acid.

These crosslinking agents may be used singly or in combination of two or more kinds thereof. The amount of the crosslinking agent is 0.05 to 20 parts by mass and preferably 0.1 to 10 parts by mass with respect to 100 parts by mass of the acrylic rubber.

In the acrylic rubber-containing composition of the present invention, any another additive usually used in the art can be blended, and examples of the additive include lubricants, anti-aging agents, light stabilizers, fillers, reinforcing agents, plasticizers, processing aids, pigments, colourants, crosslinking accelerators, crosslinking aids, crosslinking retarders, antistatic agents, and foaming agents.

Examples of the anti-aging agents include amines, phosphates, quinolines, cresols, phenols, and dithiocarbamate metal salts, and amines are preferable such as diphenylamine derivatives such as 4,4'-bis(α,α-dimethylbenzyl)diphenylamine, and phenylenediamine derivatives.

Examples of the crosslinking accelerators include guanidine compounds, amine compounds, thiourea compounds, thiazole compounds, sulfenamide compounds, thiuram compounds, and quaternary ammonium salts, and the guanidine compounds and the amine compounds are preferable.

Furthermore, rubber, a resin, or the like can be blended as usually blended in the technical field without departing from the gist of the present invention. Examples of the rubber used in the present invention include butadiene rubber, styrene-butadiene rubber, isoprene rubber, natural rubber, acrylonitrile-butadiene rubber, acrylonitrile-butadiene-isoprene rubber, ethylene-propylene-diene rubber, and epichlorohydrin rubber. Examples of the resin include a polymethyl methacrylate (PMMA) resin, a polystyrene (PS) resin, a polyurethane (PUR) resin, a polyvinyl chloride (PVC) resin, an ethylene/vinyl acetate (EVA) resin, a styrene/acrylonitrile (AS) resin, and a polyethylene (PE) resin.

The total blending amount of the rubber and the resin is 50 parts by mass or less, preferably 10 parts by mass or less, and more preferably 1 part by mass or less with respect to 100 parts by mass of the acrylic rubber of the present invention.

The method for manufacturing an acrylic rubber-containing composition of the present invention includes a step of blending the crosslinking agent into the acrylic rubber obtained with the method for manufacturing acrylic rubber.

In the method of blending the acrylic rubber-containing composition of the present invention, any means conventionally used in the field of polymer processing can be used, and examples of the means include an open roll, a Banbury mixer, and various kneaders.

As the blending procedure, an ordinary procedure performed in the field of polymer processing can be used. For example, a procedure can be used in which only a polymer is first kneaded, then a compounding agent, other than a crosslinking agent and a crosslinking accelerator, is added to produce a kneading A compound, and then kneading B is performed in which the crosslinking agent and the crosslinking accelerator are added.

A crosslinked acrylic rubber product is obtained by crosslinking the acrylic rubber-containing composition, and the method for manufacturing the crosslinked acrylic rubber product includes a step of crosslinking the acrylic rubber-containing composition obtained with the method for manufacturing an acrylic rubber-containing composition.

The composition of the present invention can be usually heated to 100 to 250°C to obtain a crosslinked product. The crosslinking time depends on the temperature, and is usually 0.5 to 300 minutes. Crosslinking molding may be performed with a method in which crosslinking and molding are integrally performed, a method in which the acrylic rubber-containing composition is previously molded and then heated to obtain a crosslinked product, or a method in which the acrylic rubber-containing composition is previously heated and the resulting crosslinked product is processed for molding. As a specific method of the crosslinking molding, any method can be used, and examples of the method include compression molding with a mold, injection molding, and heating with a steam can, an air bath, infrared rays, or microwaves.

Therefore, the above-described characteristics of the crosslinked product of the present invention are utilized to use the crosslinked product suitably as various gaskets such as an O-ring, a packing, a diaphragm, an oil seal, a shaft seal, a bearing seal, a mechanical seal, a wellhead seal, a seal for electric and electronic equipment, a seal for pneumatic equipment, a cylinder head gasket mounted on a connecting portion between a cylinder block and a cylinder head, a rocker cover gasket mounted on a connecting portion between a rocker cover and a cylinder head, an oil pan gasket mounted on a connecting portion between an oil pan and a cylinder block or a transmission case, a gasket, for a fuel cell separator, mounted between a pair of housings sandwiching a unit cell including a positive electrode, an electrolyte plate, and a negative electrode, and a gasket for a top cover of a hard disk drive.

Furthermore, the crosslinked product in the present invention can be used as a rubber material, and can be suitably used, as an extrusion molded product and a mold crosslinked product used for an automobile, in various hoses. The hoses include, for example, fuel oil hoses around a fuel tank such as a fuel hose, a filler neck hose, a vent hose, a vapor hose, and an oil hose, air hoses such as a turbo air hose and an emission control hose, a radiator hose, a heater hose, a brake hose, and an air conditioner hose.

The present invention will be specifically described with reference to Examples and Comparative Examples. However, the present invention is not limited thereto.

In Examples and Comparative Examples, the polymerization conversion rate and the average particle size of the acrylic emulsion were evaluated.

### [Example 1]

### (Manufacture of Acrylic Emulsion A)

A polymerization reactor equipped with a thermometer, a stirrer, a nitrogen inlet tube, and a pressure reducer was charged with 60 parts by mass of water, 0.6 parts by mass of a polyoxyethylene alkyl ether phosphate sodium salt and 0.16 parts by mass of polyoxyethylene lauryl ether phosphate as emulsifiers, and 19.1 parts by mass of ethyl acrylate, 19.1 parts by mass of n-butyl acrylate, and 0.8 parts by mass of monobutyl fumarate as monomers, degassing by reducing pressure and substitution with nitrogen were repeated to remove oxygen sufficiently, then 0.054 parts by mass of sodium hydrogen sulfite, 0.0001 parts by mass of ferrous sulfate, and 0.03 parts by mass of ammonium persulfate were added to initiate an emulsion polymerization reaction at normal pressure and normal temperature, and the reaction was continued until the polymerization conversion rate reached 95% to obtain an acrylic emulsion A (solid content: 40%).

### [Example 2]

### (Manufacture of Acrylic Rubber Emulsion B)

An acrylic emulsion B (solid content: 40%) was obtained in the same manner as in the manufacture of the acrylic emulsion A except that the emulsifiers used to charge the polymerization reactor were changed to 0.4 parts by mass of a polyoxyethylene alkyl ether phosphate sodium salt and 0.1 parts by mass of polyoxyethylene lauryl ether phosphate. The acrylic emulsion B had a viscosity of 13.0 mPa·s.

### [Example 3]

### (Manufacture of Acrylic Rubber Emulsion C)

An acrylic emulsion C (solid content: 40%) was obtained in the same manner as in the manufacture of the acrylic emulsion B except that the emulsifiers used to charge the polymerization reactor were changed to 0.2 parts by mass of a polyoxyethylene alkyl ether phosphate sodium salt and 0.05 parts by mass of polyoxyethylene lauryl ether phosphate. The acrylic emulsion C had a viscosity of 8.0 mPa·s.

### [Example 4]

### (Manufacture of Acrylic Rubber Emulsion D)

An acrylic emulsion D (solid content: 40%) was obtained in the same manner as in the manufacture of the acrylic emulsion C except that the monomers used to charge the polymerization reactor were changed to 19.1 parts by mass of ethyl acrylate, 19.1 parts by mass of n-butyl acrylate, and 0.8 parts by mass of vinyl monochloroacetate, the emulsifiers were changed to 0.4 parts by mass of a polyoxyethylene alkyl ether phosphate sodium salt and 0.05 parts by mass of polyoxyethylene lauryl ether phosphate, and the polymerization auxiliary material was changed to 0.02 parts by mass of sodium formaldehyde sulfoxylate.

### [Example 5]

### (Manufacture of Acrylic Rubber Emulsion E)

An acrylic emulsion E (solid content: 30%) was obtained in the same manner as in the manufacture of the acrylic emulsion D except that the monomers used to charge the polymerization reactor were changed to 14.6 parts by mass of ethyl acrylate, 7.3 parts by mass of butyl acrylate, 7.3 parts by mass of methoxyethyl acrylate, and 0.8 parts by mass of vinyl monochloroacetate, and the emulsifiers were changed to 0.13 parts by mass of sodium lauryl sulfate and 0.16 parts by mass of a polyoxyethylene alkyl ether.

### [Comparative Example 1]

### (Manufacture of Acrylic Rubber Emulsion F)

An acrylic emulsion F (solid content: 30%) was obtained in the same manner as in the manufacture of the acrylic emulsion E except that the amount of water used to charge the polymerization reactor was changed to 70 parts by mass, the monomers were changed to 14.7 parts by mass of ethyl acrylate, 14.7 parts by mass of n-butyl acrylate, and 0.6 parts by mass of monobutyl fumarate, the emulsifiers were changed to 0.16 parts by mass of sodium lauryl sulfate and 0.4 parts by mass of a polyoxyethylene alkyl ether, and the polymerization auxiliary material was changed to 0.015 parts by mass of sodium hydrogen sulfite. The acrylic emulsion F had a viscosity of 5.0 mPa·s.

### [Comparative Example 2]

### (Manufacture of Acrylic Rubber Emulsion G)

An acrylic emulsion G (solid content: 40%) was obtained in the same manner as in the manufacture of the acrylic emulsion E except that the emulsifiers used to charge the polymerization reactor were changed to 0.2 parts by mass of a polyoxyethylene alkyl ether phosphate sodium salt and 0.023 parts by mass of polyoxyethylene lauryl ether phosphate. The acrylic emulsion G had a viscosity of 6.0 mPa·s.

### (Method of Measuring Average Particle Size of Acrylic Polymer in Acrylic Emulsion)

The acrylic emulsion was diluted 40 times with ion-exchanged water, and measured with a dynamic light scattering method using a particle size measuring device (Zetasizer Nano S manufactured by Malvern Panalytical Ltd.). Table 1 shows the results.

### (Method of Measuring Viscosity of Acrylic Emulsion)

The viscosity of the acrylic emulsion was measured in accordance with JIS K 7117-1 under an environment at 23°C with a rotational viscometer (Brookfield manufactured by EKO Instruments) using an LV-1 spindle at a rotation speed of 30 rpm.

### (Stability of Acrylic Emulsion)

The stability of the acrylic emulsion was evaluated in accordance with the following criteria. Table 1 shows the results.
∘: When the acrylic emulsion after completion of polymerization is left to stand for 2 hours and then filtered with an 80 mesh-size wire mesh, the amount of the aggregate is less than 1 mass% with respect to the entire acrylic emulsion.
×: When the acrylic emulsion after completion of polymerization is left to stand for 2 hours and then filtered with an 80 mesh-size wire mesh, the amount of the aggregate is 1 mass% or more with respect to the entire acrylic emulsion.

### (Coagulability of Acrylic Emulsion)

The coagulability of the acrylic emulsion was evaluated in accordance with the following criteria. Table 1 shows the results.
∘: When a mixture obtained by adding 6 parts of sodium sulfate to 100 parts by mass of water is heated to 85 °C, and 100 parts of the acrylic emulsion is added dropwise and coagulated, the obtained yield of the polymer is 95 mass% or more (based on the polymer content, obtained as a residue after drying the acrylic emulsion at 110 °C, set to 100 mass%).
×: When a mixture obtained by adding 6 parts of sodium sulfate to 100 parts by mass of water is heated to 85 °C, and 100 parts of the acrylic emulsion is added dropwise and coagulated, the obtained yield of the polymer is less than 95 mass% (based on the polymer content, obtained as a residue after drying the acrylic emulsion at 110 °C, set to 100 mass%).

**[Table 1]**

| | Example 1 | Example 2 | Example 3 | Example 4 | Example 5 | Comparative Example 1 | Comparative Example 2 |
|---|---|---|---|---|---|---|---|
| Acrylic emulsion | A | B | C | D | E | F | G |
| Emulsion size [nm] | 222.0 | 231.3 | 263.6 | 299.4 | 157.6 | 142.6 | 332.5 |
| Coagulability of emulsion | ○ | ○ | ○ | ○ | ○ | × | ○ |
| Stability of emulsion | ○ | ○ | ○ | ○ | ○ | ○ | × |

From Table 1, the acrylic emulsions in Examples obtained with the method for manufacturing of the present invention are excellent in coagulability and emulsion stability. The acrylic emulsion in Comparative Example 1 was equivalent in emulsion stability, but inferior in coagulability to the acrylic emulsions in Examples. The acrylic emulsion in Comparative Example 2 was equivalent in coagulability, but inferior in emulsion stability to the acrylic emulsions in Examples. As a result, it has been shown that the acrylic emulsions in Examples were superior in coagulability and emulsion stability to the acrylic emulsions in Comparative Examples.

### INDUSTRIAL APPLICABILITY

The acrylic emulsion of the present invention has excellent coagulability in manufacturing acrylic rubber and has excellent stability, and thus is excellent in stability during liquid feeding in the manufacturing process, so that the acrylic emulsion is useful. The acrylic rubber manufactured using the acrylic emulsion of the present invention can be widely used as a material of rubber products utilizing its excellent heat resistance, weather resistance, ozone resistance, and abrasion resistance. In particular, the crosslinked product produced using the acrylic rubber of the present invention is extremely effective as fuel hoses, air hoses, tube materials, and the like for automobiles.

## Claims

1. An acrylic emulsion comprising an acrylic polymer, the acrylic polymer including
a constituent unit derived from a (meth)acrylate and
a constituent unit having a crosslinking group, the constituent unit derived from an unsaturated monomer,
the acrylic polymer having an average particle size of 150 nm to 300 nm.

2. Acrylic rubber comprising the acrylic emulsion according to claim 1, wherein the acrylic rubber is produced using the acrylic emulsion.

3. An acrylic rubber-containing composition comprising:
the acrylic rubber according to claim 2; and
a crosslinking agent.

4. A crosslinked acrylic rubber product comprising the acrylic rubber-containing composition according to claim 3, wherein the crosslinked acrylic rubber product is produced using the acrylic rubber-containing composition.

5. A method for manufacturing acrylic rubber, the method comprising the steps of:
coagulating the acrylic emulsion according to claim 1 with a coagulant to obtain a coagulated slurry; and
drying the coagulated slurry to obtain acrylic rubber.
